# EUROPÄISCHE PATENTANMELDUNG

(11) **EP 0 738 902 A2**
(43) Veröffentlichungstag der Anmeldung: **23.10.1996**
(21) Anmeldenummer: 96105521.7
(22) Anmeldetag: 06.04.1996
(51) Int. Cl.: G01W 1/10, G06T 11/00

(54) **Verfahren und Einrichtung zur Aufbereitung von Wettersatellitenbildern**

(30) Priorität: 22.04.1995 DE 19514893
(71) Anmelder: GRUNDIG E.M.V. Elektro-Mechanische Versuchsanstalt Max Grundig, D-90762 Fürth (DE)
(72) Erfinder: Ziegler, Cornelius, c/o Grundig E.M.V., 90762 Fürth (DE)
(74) Vertreter: Langer, Andreas

(57) **Zusammenfassung**

Die Erfindung betrifft ein Verfahren und eine Einrichtung zur Aufbereitung von Wettersatellitenbildern.

Die Wettersatelliten bilden eine wichtige Informationsquelle für Meteorologen. Mit Hilfe der Wettersatelliten werden Daten übertragen, aus denen die Geschwindigkeit von Luftströmungen, Temperaturen von verschiedenen Meeresströmungen, Wolkenarten, Wolkenbewegungen und vieles mehr bestimmt werden kann. Diese Daten werden sowohl von Forschern ausgewertet, um grundsätzliche Klimaveränderungen zu erkennen als auch von Meteorologen, die kurzfristige Wettervorhersagen aus den erhaltenen Informationen ableiten können. Als besonders problematisch erweist es sich dabei - besonders für ungeübte Betrachter der Wettersatellitenbilder -, Aussagen über die in den Wettersatellitenbildern enthaltenen Wolkenarten zu machen.

Bei der vorliegenden Erfindung werden aus verschiedenen Wettersatellitenbildern Informationen über Wolkenhöhe und Wolkendichte abgeleitet. Die abgeleiteten Informationen werden in einem gemeinsamen Falschfarben- oder Graustufenbild zusammengefaßt und ermöglichen so auf einfache Weise die Kennzeichnung und Erkennung von in den Wettersatellitenbildern enthaltenen Wolkenarten, da jeder Wolkenart eine bestimmte Farbe oder Graustufe zugeordnet ist.

## Beschreibung

Die Erfindung betrifft ein Verfahren und Einrichtungen zur Aufbereitung von Wettersatellitenbildern, gemäß dem Oberbegriff der Patentansprüche 1, 2 und 4.

Die Wettersatelliten bilden eine wichtige Informationsquelle für Meteorologen. Mit Hilfe der Wettersatelliten werden Daten übertragen, aus denen die Geschwindigkeit von Luftströmungen, Temperaturen von verschiedenen Meeresströmungen, Wolkenbewegungen und vieles mehr bestimmt werden kann. Diese Daten werden sowohl von Forschern ausgewertet, um grundsätzliche Klimaveränderungen zu erkennen als auch von Meteorologen, die kurzfristige Wettervorhersagen aus den erhaltenen Informationen ableiten können.

Die von geostationären Satelliten aufgenommenen Bilder werden bei vielen Satellitensystemen zur Erde gesendet und in einem Großrechner aufbereitet. Die Aufbereitung kann das Einfügen eines Koordinatensystems (Längen- und Breitengrade) umfassen und wird z. B. in JP 2-141692 (A) beschrieben. Die im Großrechner bearbeiteten Bilder werden wieder an den Satelliten gesendet und von dort zum allgemeinen Empfang abgestrahlt.

Bildsendungen - beispielsweise vom Wettersatelliten Meteosat - können auf der Erde auf den Frequenzen 1694,5 MHz und 1691,0 MHz empfangen werden. Es wird mit horizontaler Polarisation bei einem Frequenzhub von +9 kHz gesendet. Pro Zeile werden 840 Bildpunkte übertragen, wobei die Übertragung einer Zeile 250 ms dauert. Bei den geostationären Satelliten erfolgt die Bildaussendung nach einem vorgegebenen Zeitplan, nach dem zu bestimmten Zeiten Bilder verschiedener Gebiete gesendet werden. Die Bilder setzen sich aus Steuer- und Bildsignalen zusammen. Jede Übertragung eines Bildsignals beginnt mit einem Startsignal (300Hz-Ton, Dauer: 3 s), einem Phasensignal (Dauer: 5 s) und einem digitalen Kennsignal (zwei Bildzeilen), dem ein Bildsignal, bestehend aus Zeilenstartsignal (40 Bildpunkte) sowie Bildinhalt (800 × 800 Bildpunkte), und ein Stoppsignal (450HzTon, Dauer: 5 s) folgen. Nach dem Empfang und der Frequenzdemodulation liegen die Bildsignale in amplitudenmodulierter Form vor. Die Trägerfrequenz liegt für Meteosat-Bildsignale bei 2400 Hz.

Die Bilder werden von Meteosat mittels eines Radiometers mit drei verschiedenen Spektralbereichen, das die Erde zeilenweise abtastet, erzeugt. Der erste von Meteosat aufgenommene Frequenzbereich umfaßt teilweise sichtbare Lichtwellenlängen im Bereich von 0,4 µm bis 1,1 µm. In der Bilddarstellung erscheinen Bereiche, die mit dichten Wolken überzogen sind hell, Bereiche ohne Wolken erscheinen dunkel. Für diesen Frequenzbereich stehen zwei Kanäle zur Verfügung. Pro Bild werden 5000 Zeilen und 5000 Bildpunkte übertragen, was zu einer Auflösung von etwa 2,5 km pro Bildpunkt führt. Im Infrarotbereich mit den Lichtwellenlängen von 5,7 µm bis 7,1 µm steht ein Kanal zur Verfügung, der 2500 × 2500 Bildpunkte auflöst. In diesem Frequenzbereich wird der Wasserdampfgehalt der oberen Troposphäre aufgenommen. In der Bilddarstellung erscheinen Bereiche mit hohem Wasserdampfgehalt hell und Bereiche mit niedrigem Wasserdampfgehalt dunkel. Ein zweiter Infrarotbereich mit den Lichtwellenlängen von 10,5 µm bis 12,5 µm wird auf zwei Kanälen übertragen, von denen einer redundant ist. Die empfangene Strahldichte in diesem Frequenzbereich hängt von der Temperatur der aufgenommenen Oberfläche ab. Kalte Oberflächenbereiche erzeugen eine geringe Strahldichte und somit ein helles Bild. Warme Oberflächen erzeugen dunkle Bildbereiche.

Bei der Auswertung dieser Bilder ergeben sich - besonders für ungeübte Betrachter - Probleme, weil aus den übertragenen Bildern die jeweils vorhandenen Wolkenarten nicht ohne weiteres erkennbar sind.

Aufgabe der vorliegenden Erfindung ist es deshalb, ein Verfahren und Einrichtungen anzugeben, welche eine Erkennung der in den Wettersatelliten enthaltenen Wolkenarten auf einfache Art und Weise ermöglichen.

Diese Aufgabe wird erfindungsgemäß durch die Merkmale der Patentansprüche 1, 2 und 4 gelöst.

Der Vorteil der vorliegenden Erfindung liegt insbesondere darin, daß durch die Auswertung von in verschiedenen Wettersatellitenbildern enthaltenen Informationen über Höhe sowie Dichte und/oder Dicke der in den Wettersatellitenbildern enthaltenen Wolken eine eindeutige Kennzeichnung der jeweiligen Wolkenart erreicht wird, wodurch insbesondere ungeübten Betrachtern die Erkennung der in den Wettersatellitenbildern enthaltenen Wolkenarten ermöglicht wird.

Weitere Vorteile der vorliegenden Erfindung ergeben sich aus den abhängigen Ansprüchen und der nachfolgenden Beschreibung an Hand von Figuren. In den Figuren sind nur die im Zusammenhang mit der vorliegenden Erfindung wesentlichen Bestandteile dargestellt.

Es zeigt
Figur 1 ein Blockschaltbild einer ersten Ausführungsform einer erfindungsgemäßen Einrichtung und
Figur 2 ein Blockschaltbild einer zweiten Ausführungsform einer erfindungsgemäßen Einrichtung.

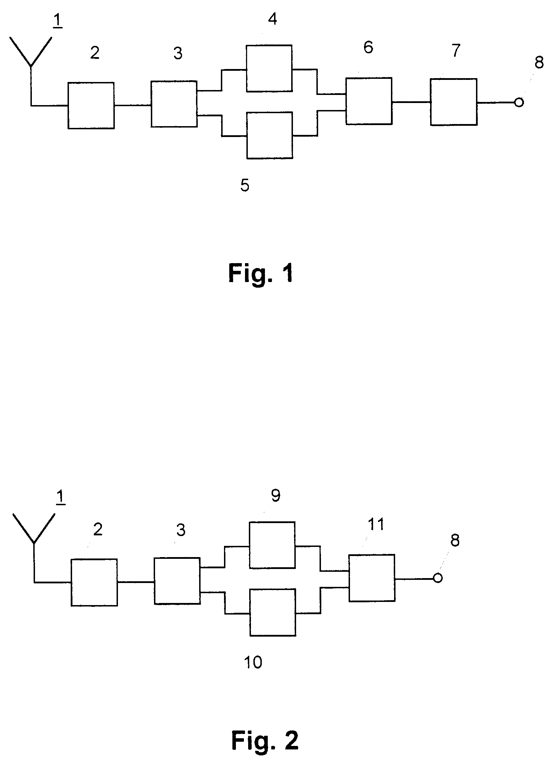

In Figur 1 sind eine Antenne 1, ein Empfänger 2, ein Speicher 3 sowie vier Zuordnungseinheiten 4, 5, 6 und 7 dargestellt. Die mittels der Antenne 1 empfangenen Signale eines Wettersatelliten, beispielsweise von Meteosat, werden im Empfänger 2 in bekannter Weise aufbereitet und demoduliert, so daß am Ausgang des Empfängers 2 die rasterförmigen Bildinformationen zur weiteren Verarbeitung zur Verfügung stehen.

Da die von Meteosat in verschiedenen Spektralbereichen aufgenommenen Bilder eines bestimmten Bereichs der Erde nacheinander vom Satelliten gesendet werden, wird zur weiteren Verarbeitung der Bilder mindestens ein Bild eines Spektralbereichs in Speicher 3 zwischengespeichert. Bei Zwischenspeicherung von nur einem Bild erfolgt die weitere Verarbeitung beim Empfang des zweiten, zur erfindungsgemäßen Aufbereitung nötigen Bildes.

Bei der weiteren Verarbeitung wird einem im Infrarotbereich aufgenommenen Bild in der ersten Zuordnungseinheit 4 ein Wert zugeordnet, der der Höhe der in dem Bild enthaltenen Wolken entspricht. Dazu wird die Helligkeitsangabe eines jeden Rasterpunkts verwendet. Die Helligkeitsinformationen des im Infrarotbereich aufgenommenen Bildes entsprechen der Temperatur der Wolken. Die Wolken sind um so kälter, je höher sie sich über der Erde befinden. Niedrige Temperaturen und damit große Höhe werden durch große Helligkeitswerte wiedergegeben. Große Höhenwerte entsprechen Cirrus-Wolken, mittlere Altus-Wolken.

Die zweite Zuordnungseinheit 5 ordnet jedem Rasterpunkt einen Wert zu, der der Dichte bzw. Dicke der im ausgewerteten Bild enthaltenen Wolken entspricht. Zu diesem Zweck werden von der zweiten Zuordnungseinheit 5 Bilder verarbeitet, die vom Satelliten im Bereich sichtbarer Lichtwellenlängen aufgenommen wurden. Große Helligkeitswerte entsprechen einer dichten Bewölkung, geringe Helligkeitswerte stellen Gebiete mit geringer oder ohne Bewölkung dar.

Von der dritten Zuordnungseinheit 6 werden die von der ersten und zweiten Zuordnungseinheit 4 und 5 ermittelten Werte für Höhe sowie Dichte und/oder Dicke für zusammengehörige Rasterpunkte ausgewertet und dem jeweiligen Rasterpunkt wird ein die ermittelte Wolkenart kennzeichnender Wert zugeordnet.

Von der vierten Zuordnungseinheit 7 wird jedem der Rasterpunkte entsprechend der ermittelten Wolkenart eine vorgegebene Farbe oder Graustufe zugeordnet. Das derart erzeugte Bild, welches die verschiedenen in ihm enthaltenen Wolkenarten kennzeichnet, steht zur weiteren Verarbeitung, beispielsweise der Darstellung auf einem Bildschirm, an Ausgang 8 zur Verfügung.

Die nachfolgende Tabelle stellt eine mögliche Einteilung dar, mittels der von der dritten Zuordnungseinheit 6 eine Kennzeichnung der verschiedenen Wolkenarten vorgenommen werden kann. Neben der in der Tabelle angegebenen Einteilung sind andere - insbesondere feinere - Einteilungen möglich.

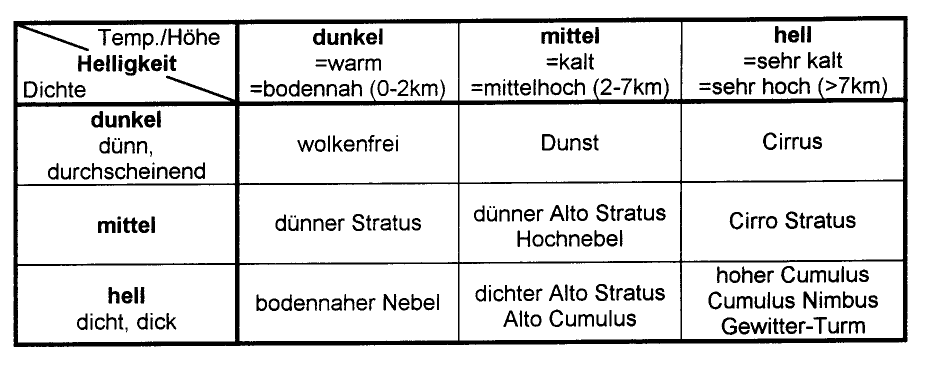

In Figur 2 sind eine Antenne 1, ein Empfänger 2, ein Speicher 3, zwei Zuordnungseinheiten 9 und 10 sowie ein Mischer 11 dargestellt. Die mittels der Antenne 1 empfangenen Signale eines Wettersatelliten, beispielsweise von Meteosat, werden im Empfänger 2 in bekannter Weise aufbereitet und demoduliert, so daß am Ausgang des Empfängers 2 die rasterförmigen Bildinformationen zur weiteren Verarbeitung zur Verfügung stehen.

Da die von Meteosat in verschiedenen Spektralbereichen aufgenommenen Bilder eines bestimmten Bereichs der Erde nacheinander vom Satelliten gesendet werden, wird zur weiteren Verarbeitung der Bilder mindestens ein Bild eines Spektralbereichs in Speicher 3 zwischengespeichert. Bei Zwischenspeicherung von nur einem Bild erfolgt die weitere Verarbeitung beim Empfang des zweiten, zur erfindungsgemäßen Aufbereitung nötigen Bildes.

Bei der weiteren Verarbeitung wird einem im Infrarotbereich aufgenommenen Bild in der ersten Zuordnungseinheit 9 eine Farbe zugeordnet, die der Höhe der in dem Bild enthaltenen Wolken entspricht. Dazu wird die Helligkeitsangabe eines jeden Rasterpunkts verwendet. Die Helligkeitsinformationen des im Infrarotbereich aufgenommenen Bildes entsprechen der Temperatur der Wolken. Die Wolken sind um so kälter, je höher sie sich über der Erde befinden. Niedrige Temperaturen und damit große Höhe werden durch große Helligkeitswerte wiedergegeben. Große Höhenwerte entsprechen Cirrus-Wolken, mittlere Altus-Wolken.

Die zweite Zuordnungseinheit 10 ordnet jedem Rasterpunkt eine Farbe zu, die der Dichte bzw. Dicke der im ausgewerteten Bild enthaltenen Wolken entspricht. Zu diesem Zweck werden von der zweiten Zuordnungseinheit 10 Bilder verarbeitet, die vom Satelliten im Bereich sichtbarer Lichtwellenlängen aufgenommen wurden. Große Helligkeitswerte entsprechen einer dichten Bewölkung, geringe Helligkeitswerte stellen Gebiete mit geringer oder ohne Bewölkung dar.

Die von den Zuordnungseinheiten 9 und 10 erzeugten Falschfarbenbilder werden vom Mischer 11 zu einem Bild zusammengefaßt, das am Ausgang 8 zur weiteren Bearbeitung, beispielsweise der Darstellung auf einem Bildschirm, zur Verfügung steht. Die sich durch die Mischung ergebenden Farben kennzeichnen die jeweilige Wolkenart in eindeutiger Weise, wenn für die Erstellung der Falschfarbenbilder mittels der Zuordnungseinheiten 9 und 10 jeweils unterschiedliche Farben verwendet werden.

Bei beiden oben beschriebenen Ausführungsformen kann eine Zuordnung von Farbe bzw. Graustufe und einer Klartextangabe im darzustellenden Bild eingefügt werden, welche den Zusammenhang Wolkenart/Farbe bzw. Graustufe kennzeichnet.

Statt der Verwendung eines Speicher 3 vor den Zuordnungseinheiten 4 und 5 bzw. 9 und 10 kann auch eine Speicherung von mindestens einem Bild nach den Zuordnungseinheiten erfolgen. In diesem Fall reicht in beiden Ausführungsformen eine Zuordnungseinheit aus, die nacheinander Höhe und Dichte zuordnet.

Eine einfache Realisierung der Zuordnungseinheiten und des Mischers kann für beide Ausführungsformen mittels eines µ-Computers erreicht werden. Auch der Speicher 3 kann Bestandteil eines µ-Computers sein.

## Patentansprüche

1. Verfahren zur Aufbereitung von Wettersatellitenbildern, das der Kenntlichmachung unterschiedlicher Wolkenarten dient, mit ersten, im Infrarotbereich aufgezeichneten, rasterförmigen Wettersatellitenbildern und
zweiten, im Bereich des sichtbaren Lichts aufgezeichneten, rasterförmigen Wettersatellitenbildern,
**dadurch gekennzeichnet,**
daß den einzelnen Rasterpunkten der ersten Wettersatellitenbilder Informationen über die Höhe der Wolken entnommen werden,
daß den einzelnen Rasterpunkten der zweiten Wettersatellitenbilder Informationen über die Dichte und/oder die Dicke der Wolken entnommen werden,
daß die Wolkenart aus Höhe und Dichte und/oder Dicke für jeden Rasterpunkt abgeleitet wird und
daß Rasterpunkte in Bildbereichen mit der gleichen Wolkenart in einer einheitlichen Farbe oder Graustufe dargestellt werden.

2. Einrichtung zur Aufbereitung von Wettersatellitenbildern, die der Kenntlichmachung unterschiedlicher Wolkenarten dient, mit einem Empfänger (2) für den Empfang und die Demodulation von rasterförmigen Wettersatellitenbildern, wobei der Empfänger (2) erste, im Infrarotbereich aufgezeichnete Wettersatellitenbilder sowie zweite im Bereich des sichtbaren Lichts aufgezeichnete Wettersatellitenbilder empfängt,
**dadurch gekennzeichnet,**
daß den ersten Wettersatellitenbildern in einer ersten Zuordnungseinheit (4) Werte entsprechend der im jeweiligen Rasterpunkt vorhandenen Bildhelligkeit zugeordnet werden, die der Höhe der in den ersten Wettersatellitenbildern enthaltenen Wolken entsprechen,
daß den zweiten Wettersatellitenbildern in einer zweiten Zuordnungseinheit (5) Werte entsprechend der im jeweiligen Rasterpunkt vorhandenen Bildhelligkeit zugeordnet werden, die der Dichte und/oder Dicke der in den zweiten Wettersatellitenbildern enthaltenen Wolken entsprechen, und
daß mittels einer dritten Zuordnungseinheit (6) aus den Werten für Höhe sowie Dichte und/oder Dicke den jeweiligen Rasterpunkten eine Kennzeichnung für die jeweils vorliegende Wolkenart zugeordnet wird, und
daß mittels einer vierten Zuordnungseinheit (7) Falschfarben- oder Graustufenbilder erzeugt werden, wobei die vierte Zuordnungseinheit (7) entsprechend der Kennzeichnung durch die dritte Zuordnungseinheit (6) jedem Rasterpunkt eine Farbe oder Graustufe zuordnet, welche die vorliegende Wolkenart kennzeichnet.

3. Einrichtung nach Anspruch 2,
**dadurch gekennzeichnet,**
daß in das die Wolkenart kennzeichnende Falschfarben- oder Graustufenbild mittels der vierten Zuordnungseinheit (7) zusätzlich ein Farb- oder Graustufenverlauf eingeblendet wird, wobei den einzelnen Farben oder Graustufen die Wolkenart in Klartext zugeordnet ist, welche durch die jeweilige Farbe oder Graustufe gekennzeichnet wird.

4. Einrichtung zur Aufbereitung von Wettersatellitenbildern, die der Kenntlichmachung unterschiedlicher Wolkenarten dient, mit einem Empfänger (2) für den Empfang und die Demodulation von rasterförmigen Wettersatellitenbildern, wobei der Empfänger (2) erste, im Infrarotbereich aufgezeichnete Wettersatellitenbilder sowie zweite im Bereich des sichtbaren Lichts aufgezeichnete Wettersatellitenbilder empfängt,
**dadurch gekennzeichnet,**
daß mittels einer ersten Zuordnungseinheit (9) Falschfarbenbilder für die ersten Wettersatellitenbildern erzeugt werden, wobei die Farben entsprechend der im jeweiligen Rasterpunkt vorhandenen Bildhelligkeit zugeordnet werden und die Höhe der in den ersten Wettersatellitenbildern enthaltenen Wolken kennzeichnen,
daß mittels einer zweiten Zuordnungseinheit (10) Falschfarbenbilder für die zweiten Wettersatellitenbildern erzeugt werden, wobei die Farben entsprechend der im jeweiligen Rasterpunkt vorhandenen Bildhelligkeit zugeordnet werden und die Dichte und/oder Dicke der in den zweiten Wettersatellitenbildern enthaltenen Wolken kennzeichnen, und
daß die erzeugten Falschfarbenbilder mittels eines Mischers (11) zu einem die Wolkenart kennzeichnenden Falschfarbenbild gemischt werden.

5. Einrichtung nach Anspruch 4,
**dadurch gekennzeichnet,**
daß in das die Wolkenart kennzeichnende Falschfarbenbild mittels des Mischers (11) zusätzlich ein Farbverlauf eingeblendet wird, wobei den einzelnen Farben die Wolkenart in Klartext zugeordnet ist, welche durch die jeweilige Farbe gekennzeichnet wird.
